# EUROPEAN PATENT APPLICATION

(11) **EP 4 790 852 A1**
(43) Date of publication of application: **12.08.2026**
(21) Application number: 26155022.2
(22) Date of filing: 29.01.2026
(51) Int. Cl.: H01S 3/067, H01S 3/1112, H01S 3/16

(54) **PHOTONIC-CHIP ENABLED MODE-LOCKED FIBER LASER USING A NONLINEAR MIRROR**

(30) Priority: 07.02.2025 US 202519048257
(71) Applicant: Vector Atomic, Inc., Pleasanton, CA 94566 (US)
(72) Inventor: KOWLIGY, Abijith Sudarsan, Pleasanton, CA 94566 (US); CINGOZ, Arman, Pleasanton, CA 94566 (US); FUJITA, Junichiro, Pleasanton, CA 94566 (US)
(74) Representative: Kehl, Ascherl, Liebhoff & Ettmayr Patentanwälte Partnerschaft mbB

(57) **Abstract**

Embodiments herein describe a hybrid mode-locked laser that includes both fiber components (e.g., a gain fiber) and a PIC that includes a nonlinear mirror. The PIC in the hybrid mode-locked laser can include different types of nonlinear mirrors. The nonlinear can function as an artificial saturable-absorber mirror. The nonlinear mirror can promote pulse formation to create the mode-locked laser.

## Description

### FIELD

Embodiments of the present invention generally relate to a hybrid mode-locked laser formed using fiber components and a photonic chip (e.g., a photonic integrated circuit (PIC)).

### BACKGROUND

Laser systems based on fiber-optics form the backbone of the telecommunication industry due to their robustness and availability of bonded, integrated components that can be fusion spliced onto fibers to provide a variety of functionalities, such as mirrors, filters, isolators, and optical circulators. One disadvantage of fiber-based linear cavity lasers is their sensitivity to vibrations and acoustics that stem from three problems: (1) imperfections in fiber splices that can lead to spurious intra-cavity back reflections; (2) temperature and pressure fluctuations as well as mechanical vibrations that cause the fiber length to change; and (3) a lack of high-speed actuators that can control the cavity length at high frequencies (>10 kHz).

The typical solution to the first problem is to build a ring laser with an intra-cavity isolator that enforces unidirectional lasing. However, this makes it difficult to incorporate a high-speed actuator. These lasers typically incorporate fiber stretchers that are strain-based and thus low bandwidth and of limited dynamic range. High-bandwidth actuation using piezo-electric transducers (PZT) can be incorporated behind a cavity end mirror in linear laser cavities, which provide a free-space length displacement. However, this architecture suffers from spurious intra-cavity back reflections. The ring laser geometry demonstrates robustness against environmental perturbations, an important prerequisite for field-deployed systems.

### SUMMARY

One embodiment described herein is a laser that includes a pump port configured to receive a pump optical signal, a gain fiber, and a photonic integrated circuit (PIC) optically coupled to the gain fiber. The PIC includes a nonlinear mirror configured to promote pulse formation to create a mode-locked laser (MLL), wherein the nonlinear mirror comprises a coupler comprising a first interface configured to receive an optical signal from the gain fiber and two interfaces coupled to one or more waveguides in the nonlinear mirror.

Another embodiment described herein is a method that includes pumping a continuous wave (CW) optical signal into a laser cavity, transmitting the optical signal through a gain fiber that is part of the laser cavity, transmitting the optical signal through a nonlinear mirror in a PIC to promote pulse formation to create a mode-locked laser (MLL).

Another embodiment described herein is a system that includes a pump port configured to receive a pump optical signal, a gain fiber, and a PIC optically coupled to the gain fiber. The PIC includes a nonlinear mirror configured to function as an artificial saturable absorber mirror.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.
Figure 1 illustrates a ring cavity fiber laser, according to one embodiment.
Figure 2 is a chart illustrating the performance of the hybrid fiber laser illustrated in Figure 1, according to one embodiment.
Figure 3A illustrates a ring cavity fiber laser with a nonlinear loop mirror, according to one embodiment.
Figure 3B is a cross section of an anomalous dispersion waveguide in the nonlinear loop mirror in Figure 3A, according to one embodiment.
Figure 4 illustrates a ring cavity fiber laser with a nonlinear interferometer, according to one embodiment.
Figures 5A-5B illustrate different implementations of cavity length tuners, according to embodiments.
Figure 6 illustrates using an actuator to form a cavity length tuner, according to one embodiment.
Figures 7A and 7B illustrate lasers for generating a frequency comb from a mode-locked laser, according to one embodiment.
Figure 8 illustrates a saturable absorber in a wavelength division multiplexer, according to one embodiment.
Figures 9 and 10 illustrate linear cavity lasers with a nonlinear mirror, according to one embodiment.
Figure 11 is a method for generating a mode-locked laser, according to one embodiment.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

Embodiments herein describe a hybrid mode-locked laser that includes both fiber components (e.g., a wavelength division multiplexer, isolator, doped and undoped optical fibers, etc.) and a PIC that includes a nonlinear mirror. While a mode-locked laser can be built with only fiber components, or only using a single platform (e.g., a glass substrate or PIC), they typically cannot simultaneously satisfy the optimal conditions of possessing: (a) a large optical nonlinearity to promote pulse formation, (b) a modest, linear round-trip gain, and (c) anomalous group-velocity dispersion. While optical fibers lack large optical nonlinearities, rare-earth-ion doping for laser cavity gain along with a suitable group-velocity dispersion (GVD) are difficult to attain in PICs. To address the lack of a large nonlinearity in optical fibers, some solutions utilize nonlinear amplifying loop mirrors (NALM), which are not reliable for self-starting lasers, or semiconductor saturable absorber mirrors (SESAM), which have low damage thresholds and can degrade in performance over time. SESAM based mode-locked lasers (MLL) are deployed for industrial applications because they can be built from commercially-available fiber components (including SESAMs that can be integrated into a telecom component package). However, for applications such as frequency metrology and precision spectroscopy, where the fiber MLLs are stabilized to form optical frequency combs, high-bandwidth (>10 kHz) intra-cavity actuators are often used. In this case, the laser cavity can include a free-space portion to incorporate PZTs that are glued to the SESAMs to serve as cavity length actuators. These lasers are difficult to align and can lead to a large variation in performance. However, with a hybrid approach to building a fiber-based MLL, the individual disadvantages of each platform can be overcome. Rare-earth-ion (e.g. erbium (Er), ytterbium (Yb), thulium (Tm)) doping for gain, optical isolation for unidirectional lasing, and anomalous GVD are readily available in optical fiber, whereas large optical nonlinearities are achieved in photonic integrated circuits due to the high-confinement of the optical mode and small effective mode areas (~ λ²). In addition, in one embodiment free-space portions for the laser cavity can be fully eliminated since alignment between an optical fiber and a PIC is relatively simple.

In one embodiment, the PIC in the hybrid MLL serves the function of a SESAM by preferentially lowering the round-trip cavity loss for large peak power pulses. Conversely, it is lossy for single frequency or continuous-wave cavity modes. The PIC can include different types of nonlinear mirrors. A first type is a nonlinear loop mirror (e.g., a Sagnac interferometer) while a second type is a nonlinear Michelson interferometer. As such, the nonlinear mirrors described herein can be referred to as artificial saturable absorber mirrors.

Typically, free space optics are used to direct light onto a SESAM which promotes pulse formation by absorbing low power light but reflecting high power light. However, this function can be performed by nonlinear mirrors (e.g., the Sagnac or Michelson interferometers) in a PIC which avoids free space optics. Moreover, the semiconductor absorption in SESAMs is strongly wavelength dependent, and thus the material stack is optimized for each wavelength band. The artificial saturable absorber mirrors (e.g., the interferometers) can be generally wavelength agnostic.

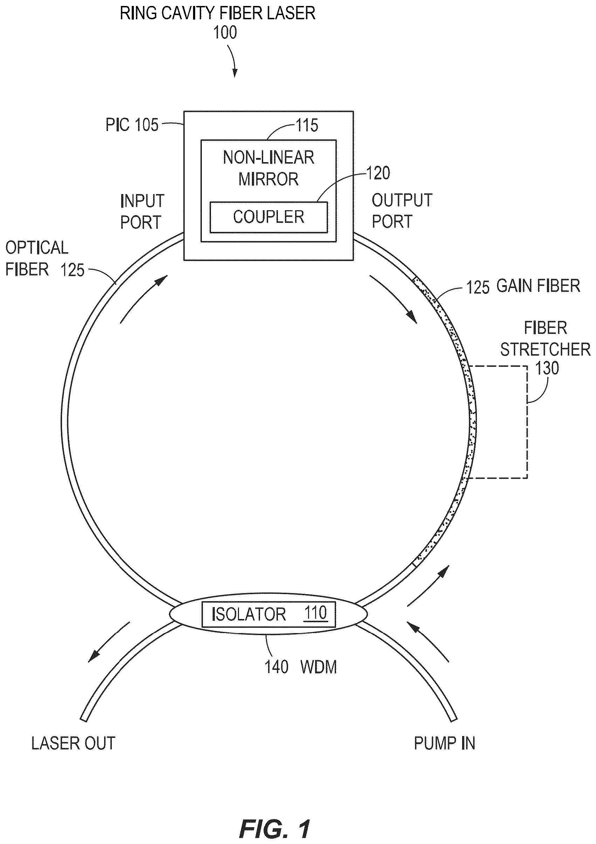

Figure 1 illustrates a ring cavity fiber laser 100, according to one embodiment. The laser 100 receives an optical signal (e.g., light) from a pump source (not shown) at a pump port which is coupled to a wavelength division multiplexer (WDM) 140. The light received from the pump at the WDM 140 is transmitted in the counterclockwise direction towards a gain fiber 135. As a non-limiting example, the pump may be a 980 nm optical signal which causes the gain fiber 135 to fluoresce and generate a 1560 nm optical signal. Any of the pump optical signal (980 nm) that was not absorbed by the gain fiber 135, and any of the optical signal generated by the gain fiber 135 (1560 nm light) that travels in the counterclockwise direction is dispersed by an isolator 110 in the WDM 140 (although the isolator 110 could be a separate optical component from the WDM 140). That is, the isolator 110 does not permit optical signals to traverse the ring cavity fiber laser 100 in the counterclockwise direction. However, the light generated by the gain fiber 135 that travels in the clockwise direction passes through the WDM 140 and enters the optical fiber 125 and a PIC 105.

The ring cavity fiber laser 100 includes a ring cavity formed by an optical fiber 125, the PIC 105, gain fiber 135, and the WDM 140. In this embodiment, only the light propagating in the clockwise direction can pass through the WDM 140, however, it is equally feasible to configure the laser 100 such that only the light traveling in the counterclockwise direction passes through the WDM 140. In any case, after traveling around the ring cavity, the WDM 140 permits at least a portion of the light to exit the laser 100 at a laser output.

In one embodiment, the optical fiber 125 is different from the gain fiber 135. For example, the optical fiber 125 may be an undoped or non-gain fiber while the gain fiber 135 can be a doped optical fiber. The gain fiber 135 is used to amplify the light traveling in the ring cavity. In one embodiment, the gain fiber 135 is fused or spliced to the optical fiber 125. That is, each end of the gain fiber 135 can be fused to respective optical fibers 125. As shown, one piece of optical fiber 125 optically couples the WDM 140 to the PIC 105 via an input port, a second piece of optical fiber 125 optically couples the PIC 105 via an output port to a first end of the gain fiber 135, and a third piece of optical fiber 125 optically couples a second end of the gain fiber 135 to the WDM 140. However, this is just one example, and other implementations may use more or fewer pieces of optical fiber 125.

The PIC 105 includes a non-linear mirror 115 that includes a coupler 120. The coupler 120 receives, at a first interface, the light as it propagates in the clockwise direction from the input port and transmits the light to an interferometer in the mirror 115 using two interfaces. While various implementations of the nonlinear mirror 115 (e.g., an artificial saturable absorber mirror) are described in the figures below, the nonlinear mirror 115 (e.g., a nonlinear optical loop mirror (NOLM)) reflects the light back into the input port at low power (which is absorbed by the isolator 110) but transmits the light at high power into the output port, reinforcing the clockwise lasing in the ring cavity. As more optical power is pumped into the laser 100, for a short period of time (a few femtoseconds), the nonlinear mirror 115 reduces the round-trip cavity loss so that clockwise pulse propagation is promoted. For example, the pump optical signal can be a continuous wave (CW) optical signal which the nonlinear mirror 115 converts into a MLL (i.e., a series of pulses of light with extremely short durations, preferably less than 100 femtoseconds). This MLL can later be used to, for example, generate a frequency comb. Different types of nonlinear mirrors 115 and their operation are discussed in more detail below.

The laser 100 can include an optional fiber stretcher 130 (illustrated using dashed lines) that physically stretches the optical fiber 125 to increase the length of the ring cavity. That is, the fiber stretcher 130 can be used to control the length of the ring cavity. The fiber stretcher 130 may use a strain-based technique (e.g., a piezoelectric PZT actuator) that is low bandwidth and limited dynamic range. In one embodiment, the fiber stretcher 130 is used to make slow but larger adjustments to the length of the ring cavity.

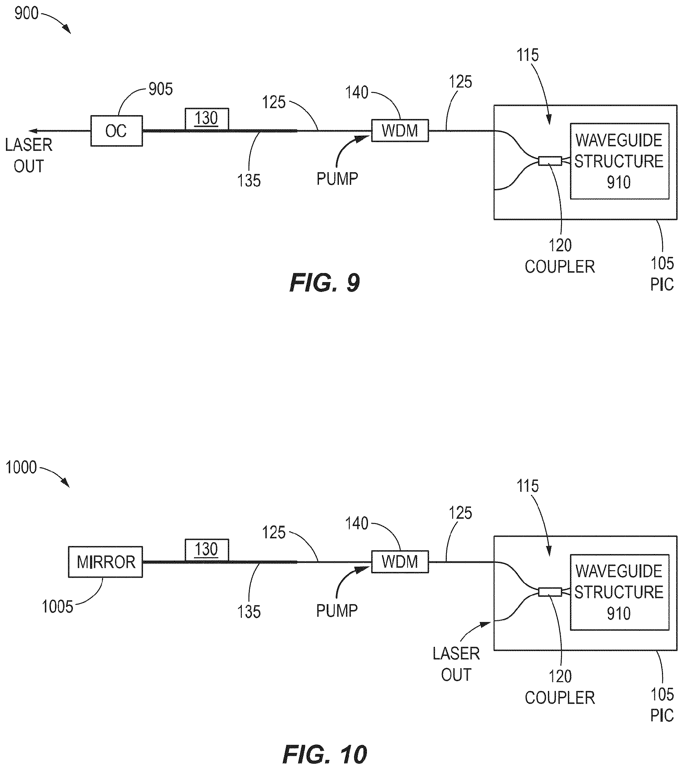

The hybrid approach in Figure 1 has several advantages. One, free space optics are avoided since the nonlinear mirror 115 is implemented in the PIC 105, rather than using a SESAM. This avoids the difficulties in aligning the free space optics to the SESAM. Second, the gain medium is implemented using the gain fiber 135 rather than attempting to place a gain medium in the PIC 105, which complicates the fabrication of the PIC 105. In addition, doped optical fiber provides low optical nonlinearities (~1/W-km), anomalous group-velocity dispersion and combined with high doping, de-couples the nonlinearity required for mode-locking and the linear, large gain that promotes pulse formation. That is, the gain fiber 135 can provide linear, large gain while the nonlinear mirror 115 in the PIC 105 provides the nonlinearity for mode-locking. Third, using optical fiber allows for the use of the WDM 140 (which is a common telecommunication component) that has the isolator 110 and enables a ring geometry, providing an environmentally stable oscillator design (which is less susceptible to vibration than a linear cavity). However, as discussed in Figures 9 and 10 below, the embodiments herein can include linear laser cavities although these may be more susceptible to vibration. Further, using a ring cavity with the PIC 105 avoids spurious intra-cavity back reflections.

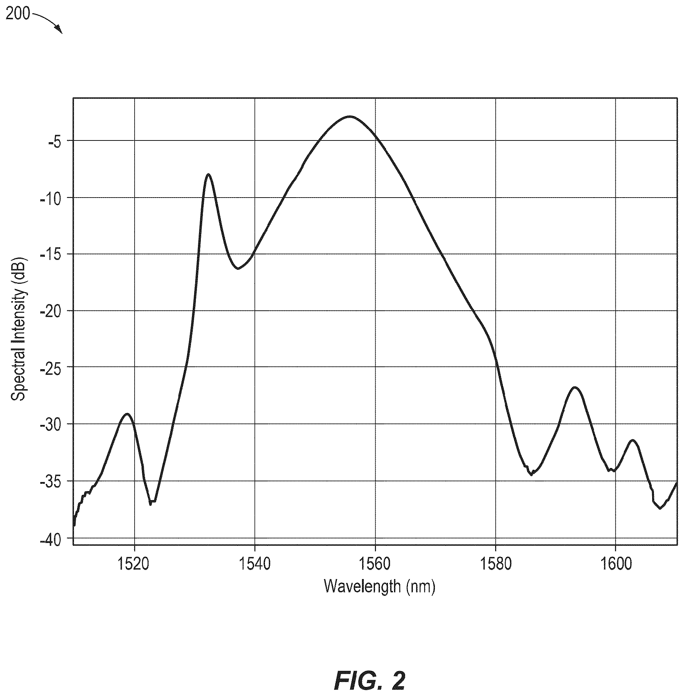

Figure 2 is a chart 200 illustrating the performance of the hybrid fiber laser illustrated in Figure 1, according to one embodiment. That is, the chart 200 illustrates the spectrum of the laser 100 in Figure 1 after mode-locking is established at the wavelengths around 1550nm.

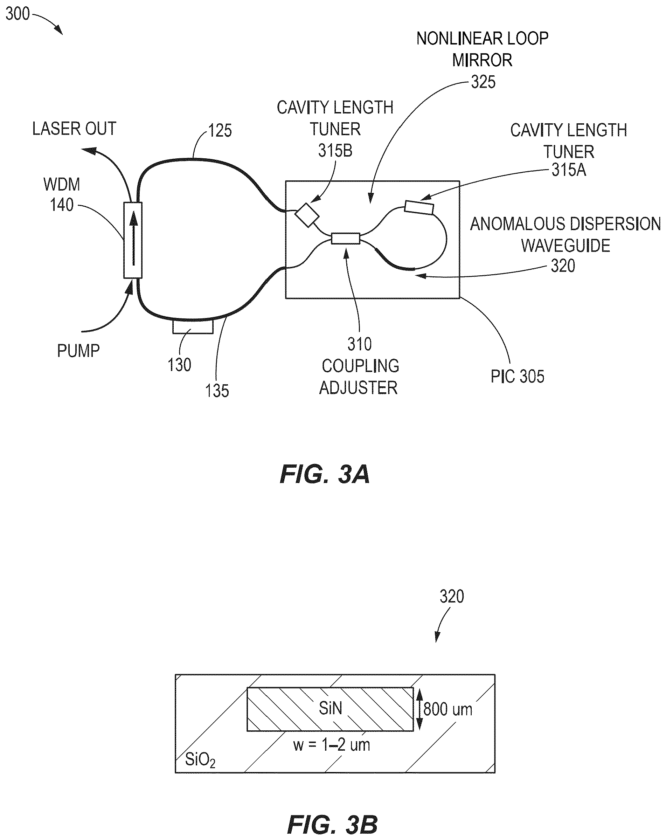

Figure 3A illustrates a ring cavity fiber laser 300 with a nonlinear loop mirror 325 in a PIC 305, according to one embodiment. The laser 300 includes many of the same components described in Figure 1 such as the WDM 140, the WDM 140, and the gain fiber 135 which are not described in detail here.

The PIC 305 illustrates one implementation of the PIC 105 in Figure 1. The PIC 305 includes a coupling adjuster 310, a cavity length tuners 315A and 315B, an anomalous dispersion waveguide 320, and the nonlinear loop mirror 325. The coupling adjuster 310 is one example implementation of the coupler 120 in Figure 1. In one embodiment, the adjuster 310 is a heater that can change the coupling ratio between the two ends of a loop waveguide in the nonlinear loop mirror 325. In this example, the coupling adjuster 310, cavity length tuner 315A and the loop waveguide (which includes the anomalous dispersion waveguide 320) form the nonlinear loop mirror 325.

In this example, the WDM 140 forces the light to propagate clockwise through the gain fiber 135, the PIC 305, and the fiber 125. When the light is received at the coupling adjuster 310 at a first interface, it can be adjusted to control how much light is transmitted into the upper waveguide arm of the loop mirror 325 versus the lower waveguide arm of the loop mirror 325. That is, the coupling adjuster 310 has two interfaces coupled to the loop mirror 325 and can adjust the ratio of light transmitted to the loop mirror 325 via these interfaces.

In one embodiment, the coupling adjuster 310 is a 2x2 coupler with an asymmetric split ratio that can be tuned via, e.g., an on-chip micro-heater. For example, when the laser 300 is first powered on, it may be favorable to promote pulse formation to set the coupling adjuster 310 so that more light is coupled into one of the waveguide arms versus the other (e.g., a split ratio of 90/10). For instance, it may better promote pulse formation to direct more of the light into the lower part of the loop mirror 325 which includes the anomalous dispersion waveguide 320. However, after the mode-lock is achieved, the coupling adjuster 310 may be adjusted to a different ratio (e.g., a split ratio of 50/50) for better efficiency.

As shown, the anomalous dispersion waveguide 320 is wider than the remaining portion of the waveguide forming the loop of the nonlinear loop mirror 325. For example, Figure 3B illustrates a cross section of the waveguide in the nonlinear loop mirror 325. The width of the waveguide can vary depending on whether the waveguide is forming the anomalous dispersion waveguide 320 or not. For example, when forming the anomalous dispersion waveguide 320, the waveguide has a width (w) of approximately 2 microns (um) and a thickness or height of approximately 800 nm. However, outside of the anomalous dispersion waveguide 320, the waveguide of the nonlinear loop mirror 325 can have a width of approximately 1 micron.

In this example, the waveguide in the loop mirror 325 can be formed from Silicon Nitride, but other suitable waveguide materials include aluminum nitride, tantalum pentoxide, gallium phosphide, etc. The waveguide cross-section parameters in Figure 3B are specific to a silicon nitride based implementation of the PIC, and can be different if the PIC is fabricated from other material platforms. In general, any nonlinear material can be used as the waveguide so long as it provides anomalous dispersion at the desired center lasing wavelength (e.g., 1550nm in one example). In one embodiment, the total length of the loop mirror 325 can be a few centimeters.

In the loop mirror 325, a different phase shift is applied to light that travels clockwise versus the light that travels counterclockwise. As mentioned above, the coupling adjuster 310 can change how much light is transmitted clockwise versus counterclockwise in the loop mirror 325. For light traveling counterclockwise, it reaches the anomalous dispersion waveguide 320 first which promotes a non-linear phase shift via the optical Kerr effect. The width of the anomalous dispersion waveguide 320 is set (e.g., approximately 2 microns) to preferentially provide the phase shift. When the light then merges into the waveguide with the smaller width (e.g., approximately 1 micron) for the rest of the loop, this portion of the waveguide, manifesting normal dispersion, does not allow the phase shift to occur at lower intensities. As a result, a pulse in the light going counterclockwise accrues more non-linear phase shift and alters the reflection condition of the mirror 325 to promote clockwise pulse formation in the laser cavity. In contrast, a pulse in the light traveling in the clockwise direction in the loop is stretched temporally and losses its ability to acquire the non-linear phase shift due to a reduction in peak power. Thus, the peak power and phase shift on pulses in the light changes depending on the direction the pulses propagate in the loop mirror 325.

The loop mirror 325 (e.g., a Sagnac interferometer or NOLM) functions like a SESAM in that it reduces round-trip cavity loss for high intensity light pulses for very short periods of time (e.g., several 100s of femtoseconds). As such, the loop mirror 325 can promote clockwise pulse formation for a MLL operation.

In one embodiment, the coupling adjuster 310 is considered as being part of the nonlinear loop mirror 325.

The cavity length tuner 315A adjusts the repetition length/cavity length of the laser 300. In one embodiment, the cavity length tuner 315A is adjusted using a servo and a feedback signal derived from the output of the laser 300. Moreover, because cavity length tuner 315A is disposed within the loop mirror 325, the tuner 315A can also be used to control the frequency of the Carrier Envelope Offset (f_{CEO}) for frequency comb applications. That is, the tuner 315A can be used to help for f_{CEO} stabilization.

In addition (or alternatively), the PIC 305 includes a cavity length tuner 315B disposed to the left of the coupling adjuster 310. The tuner 315B is disposed on the top waveguide in the PIC 305 coupled to the fiber 125, but could also be disposed on the lower waveguide in the PIC 305 coupled to the gain fiber 135. The cavity length tuner 315B can also adjust the repetition length/cavity length of the laser 300.

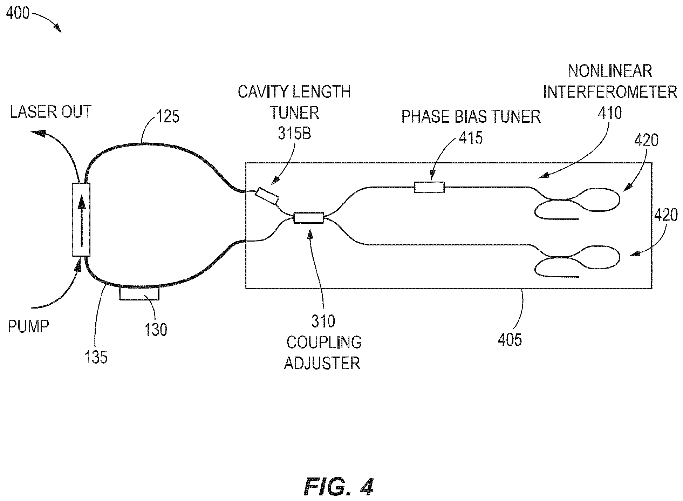

Figure 4 illustrates a ring cavity fiber laser 400 with a nonlinear interferometer 410, according to one embodiment. The laser 400 includes many of the same components described in Figure 1 such as the WDM 140, the fiber 125, and the gain fiber 135 which are not described in detail here.

Moreover, the laser 400 can also include a similar coupling adjuster 310 as described in Figure 3 in a PIC 405 (and the coupling adjuster 310 can be considered as part of the nonlinear interferometer 410). For example, the coupling adjuster 310 may be a 2x2 coupler with an asymmetric split ratio that can be tuned via, e.g., an on-chip micro-heater. For example, the coupling adjuster 310 may direct more of the light into one of the arms of a nonlinear interferometer 410 (e.g., a Michelson interferometer which is another example of a nonlinear mirror) than another arm during different phases, or modes, of operation. For example, when starting, the coupling adjuster 310 may direct more of the light into the upper arm of the interferometer 410 which includes a phase bias tuner 415 than to the lower arm. However, after the mode-locking is established, the coupling adjuster 310 may be adjusted to use a more symmetric ratio to reduce extraneous cavity loss.

When starting up, for only a few femtoseconds, the cavity loss is reduced. When a pulse is received into the arms of the nonlinear interferometer 410, it is reflected by the ends 420 of the interferometer 410 and then interferes at the coupling adjuster 310. To promote pulse formation, the differential phase between the two arms of the nonlinear interferometer 410 should be such that transmission is linearly dependent on the phase, with a large slope. This ensures that a small change in the differential phase, due to the optical Kerr effect in the Michelson interferometer, can lead to a large change in transmission of the coupling adjuster 310. This differential nonlinear, intensity-dependent phase between the two arms in the interferometer 410 can be realized when the power splitting ratio between the two arms is different, i.e., the coupling adjuster 310 is made to be asymmetric in its splitting ratio. Or the waveguide widths or lengths in each arm of the interferometer 410 could be made different to yield an intensity dependent asymmetry. In this manner, the asymmetry between the two arms of the interferometer 410 (e.g., a Michelson interferometer) can result in a differential intensity-dependent nonlinear phase shift to promote higher-intensity pulse formation. Further, a static phase relationship between the two arms of the Michelson interferometer is controlled by the phase bias tuner 415 so that the optical signals reflected by the two arms of the interferometer 410 interfere at a steep slope rather than a minimum or maximum (e.g., a linear slope as opposed to a quadratic slope).

The PIC 405 also includes the cavity length tuner 315B as discussed in Figure 3 to adjust the repetition length/cavity length of the laser 400. In one embodiment, the cavity length tuner 315B is adjusted using a servo and a feedback signal derived from the output of the laser 400. While shown as being disposed to the left of the coupling adjuster 310, the cavity length tuner 315B can be disposed on the lower waveguide in the PIC 405 coupled to the gain fiber 135, or on either arm of the nonlinear interferometer 410. The phase bias tuner 415 can also be used to control the f_{CEO} when the MLL is operated as an optical frequency comb. In combination with the cavity length tuner 315B, these actuators can be used to fully stabilize the frequency comb.

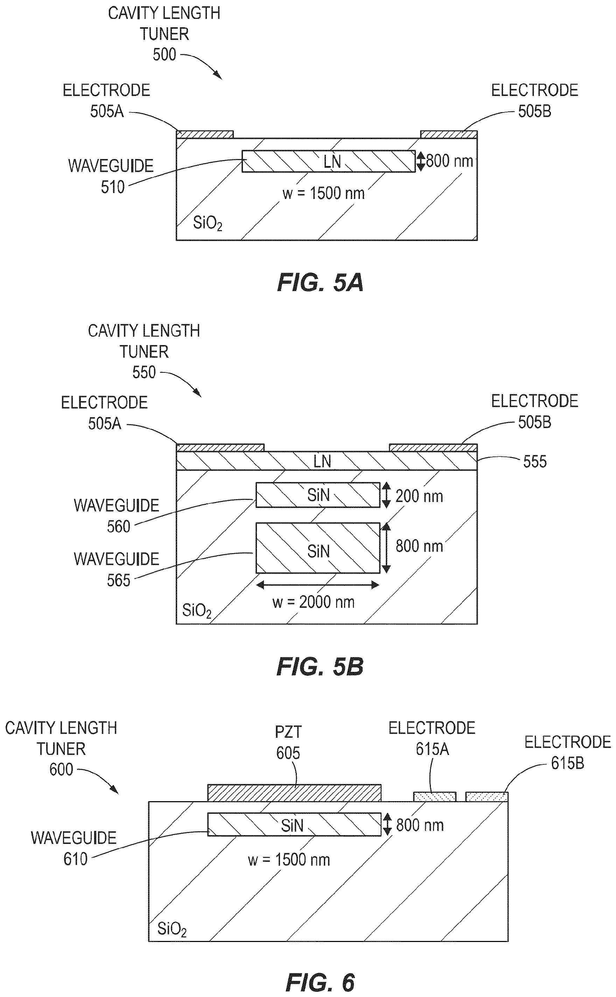

Figures 5A and 5B illustrate different implementations of a cavity length tuner (e.g., an electrical optical modulator (EOM)) to perform mode-locking as discussed above. Figure 5A illustrates a lithium niobate implementation where a waveguide 510 formed from Lithium niobate is embedded in silicon dioxide. That is, the photonic chip is fabricated on X-cut lithium niobate instead of silicon nitride, providing a strong electro-optic response for intracavity length and phase actuators. The cavity length tuner 500 includes electrodes 505A and 505B (e.g., gold pads) for tuning the length of the cavity to perform mode-locking.

The lithium niobate waveguide 510 could be used to form the waveguide for the rest of PIC, but might have a different width. For example, to form the cavity length tuner 500, the width of the waveguide 510 is 1500 nm but the width of the waveguide may be smaller at other parts of the PIC that function as normal waveguides. That is, the width of the waveguide 510 can be controlled to change the dispersion from anomalous to normal. Moreover, the electrodes 505 can be omitted from the portions of the waveguide 510 that are external to the cavity length tuner 500.

Figure 5B illustrates another implementation of a cavity length tuner 550. Here, the material implementation is a hybrid integration between silicon nitride and lithium niobate. The lithium niobate layer 555 enables an EOM/fast-cavity tuner 550. The light is transmitted in silicon nitride waveguides 560 and 565. Like with Figure 5A, the waveguides 560 and 565 in Figure 5B could be used throughout the PIC, but in the locations external to the cavity length tuner 550, the lithium niobate layer 555 and the electrodes 505A and 505B could be omitted. Further, the widths of the waveguides 560 and 565 may be reduced when external to the cavity length tuner 550.

Notably, Figure 5B is a commercial platform that is currently available, and provides a means to achieve low-loss transmission through the PIC that is currently more difficult to accomplish with the all lithium-niobate platform shown in Figure 5A. The lithium niobate layer 555 can be transfer-printed onto the PIC.

Designs described in Figures 5A and 5B can be implemented in a wide variety of material platforms. Other materials for the waveguides 510 and 560 could be tantala, aluminum nitride, gallium phosphide, or any other nonlinear material that can provide anomalous dispersion at 1550 nm (or the center lasing wavelength).

Figure 6 illustrates an actuated fast cavity tuner 600 that is an alternative to the EOM based tuner discussed above to help start the mode-locking process. On-chip piezoelectric actuation can support bandwidths in excess of 500 MHz, and can be used to trigger mode-locking for a 200 MHz or 100 MHz repetition rate MLL. It can be monolithically integrated on a silicon nitride platform in a commercial foundry. On-chip PZT 605 can include a sandwiched stack of aluminum (~100 nm, top layer), an aluminum nitride layer (~1 um thick), and a thin ~100 nm bottom layer of molybdenum that has small acoustic impedance mismatch with AIN. Such a stack enables high-speed (~1 GHz) actuation speeds. In one embodiment, the aluminum layer is connected to electrode 615A, while the molybdenum layer is connected to electrode 615B. A ~3-5 um SiO₂ layer between the nitride waveguide layer and the molybdenum reduces propagation loss by minimizing the interaction of the optical mode with the metallic layers. Like in Figures 5A and 5B, the waveguide 610 could be used throughout the PIC, but in the locations external to the cavity length tuner 600, the PZT 605 and the electrodes 615A and 615B could be omitted. Further, the widths of the waveguide 610 may be reduced when external to the cavity length tuner 600.

While Figure 6 illustrates using PZT 605 as the actuator, other types of actuators are possible such as a transfer-printed piezo electric transducer, hybrid integrated PZT, heterogeneously integrated PZT, etc.

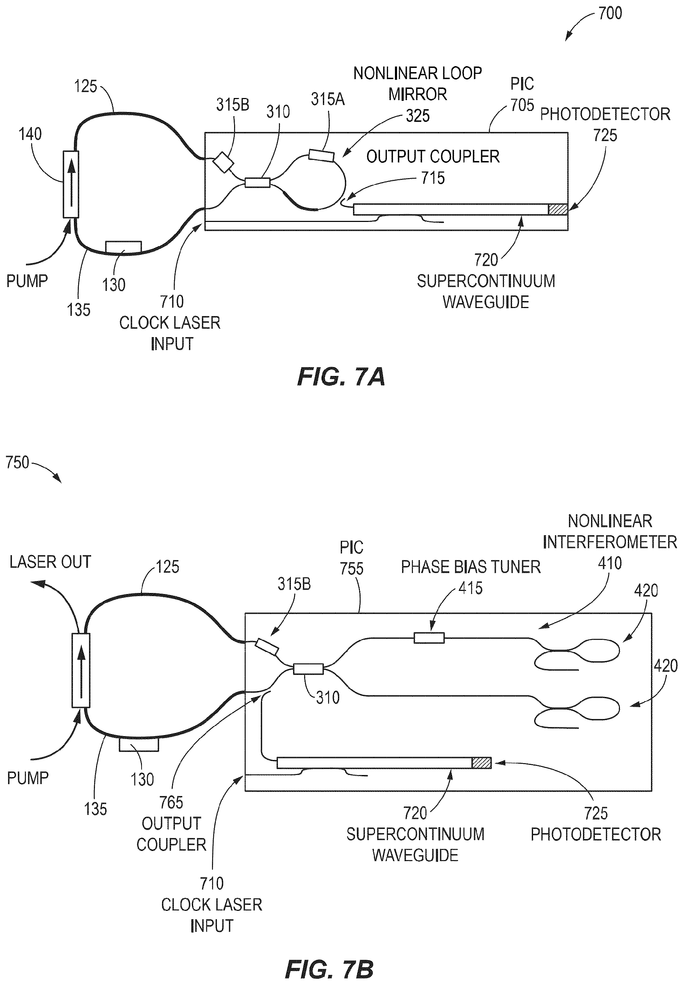

Figure 7A illustrates a laser 700 for generating a frequency comb from a MLL, according to one embodiment. The laser includes many of the same components described in the figures above, as shown by using the same reference numbers. In addition, the laser 700 includes a PIC 705 that includes the nonlinear loop mirror 325 discussed in Figure 3 for promoting pulse formation to establish a mode-locked laser. The PIC 705 also includes an output coupler 715 for coupling some of the light in the loop mirror 325 (i.e., the mode-locked laser) into a supercontinuum generation waveguide 720.

The supercontinuum waveguide 720 receives both the mode-locked laser from the nonlinear loop mirror 325 and a clock laser input 710 which can be, for example, a laser source stabilized to an atomic or optical reference. As such, the clock laser input 710 can be a very precise clock signal (or reference signal).

The supercontinuum generation waveguide 720 extends the wavelength of the frequency comb to include the wavelength of the reference laser (in this example, the clock laser input 710). The resulting optical signal is then detected using a photodetector (PD) 725 which can be processed by a computing device to detect the beat or beat note between the clock laser input 710 and at least one tooth in the mode-locked laser.

In one embodiment, the PIC 705 may be a nonlinear optical integrated photonic platform that includes the supercontinuum generation waveguide 720 formed from silicon nitride (SiN), Tantala (Ta₂O₅), lithium niobate (LiNbO₃), lithium niobate on SiN, aluminum nitride, gallium phosphide, silicon, gallium arsenide, or any heterogeneous combination of these platforms.

The optical signal produced by the supercontinuum waveguide 720 is detected by the PD 725 where the electrical output of the PD 725 is then processed by a computing device (e.g., analog or digital servo loops, a digital processor, FPGA, counter, etc.) to detect the beat or beat note between the clock laser input 710 and at least one tooth in the mode-locked laser.

Optically combining the reference laser and the mode-locked laser into the same waveguide simplifies obtaining the heterodyne (beat) signal, reduces linear loss, and provides a high signal-to-noise ratio beat signal through implicit mode-matching by the waveguide 720 of the PIC. Moreover, polarization-maintaining optical fibers used to transmit the clock laser input 710 and supercontinuum waveguide 720 can be used to ensure co-polarized light sources. By combining the signals before performing supercontinuum generation, another non-limiting advantage includes using all the light in the mode-locked laser and all the reference laser light as opposed to a 90:10 or 50:50 coupler at the output of supercontinuum generation.

Moreover, the embodiments herein are agnostic to the choice of the mode-locked laser wavelength and clock laser wavelength. That is, by using supercontinuum generation, any choice of frequency comb wavelength and reference laser wavelength can be overlapped so the beat note can be detected. Some example wavelengths for the clock laser input 710 include 1064 nm (Iodine), 1157 nm (Ytterbium), 1068 nm (Aluminum ion), 1378 nm and 1396 nm (Strontium), or 689 and 698 nm (Strontium). Some example wavelengths for the pump for generating the mode-locked laser include 2 um (Thulium), 1.5 um (Erbium), 1.064 um (Ytterbium), 1.030um (Ytterbium), 800 nm (Titanium:Sapphire). Any combinations of these wavelengths (and others) can be used in the various embodiments discussed herein.

In this example, the output of the PD 725 can be used to generate signals for stabilizing the mode-locked laser to generate a frequency comb. Optical atomic clocks offer improved frequency instabilities compared to microwave frequency standards due to the higher quality factor Q associated with an optical resonance. Many optical atomic clocks use a frequency comb to generate a high-precision electrical clock signal. This, in turn, requires the stabilization of the frequency comb to a high precision reference clock laser.

The mode-locked laser is stabilized to generate a frequency comb by locking the f_{CEO} and the repetition rate (fᵣₑₚ) of the pulses or a tooth in the frequency comb/mode-locked laser. One stabilization strategy for f_{CEO} locking is self-referencing where a beat note is generated between a frequency doubled lower frequency end of the comb spectrum with a high-frequency end, assuming the spectrum covers an optical octave. Such a broad spectrum can be achieved using supercontinuum generation. Once the comb is self-referenced, the repetition rate can be stabilized by locking a comb tooth to the reference clock laser. In certain implementations, these schemes currently use multiple PICs, which increases size and cost.

The frequency comb can include "n" comb teeth where the frequency of each tooth can be defined by the following: ${f}_{n} = {nf}_{rep} + {f}_{CEO}$
where fᵣₑₚ is the repetition rate of the pulses in the frequency comb and f_{CEO} is the offset of the lowest frequency tooth for the frequency comb from zero. In one embodiment, stabilizing the frequency comb includes detecting and stabilizing both fᵣₑₚ and f_{CEO}. f_{CEO} can be obtained through octave-spanning supercontinuum generation as shown in Figure 7 where two teeth that are at least one octave from each other are heterodyned against each other. fᵣₑₚ can be stabilized using an optical beatnote with the reference laser (e.g., the clock laser input 710). If the frequency of the reference laser is not within the envelope of the mode-locked laser output, then supercontinuum generation can also be used to lock fᵣₑₚ. The details of using a supercontinuum waveguide 720 to stabilize a frequency comb is discussed in more detail in "PHOTONIC-CHIP BASED OPTICAL HETERODYNE DETECTION USING FREQUENCY COMBS" U.S. Pat. Appl. 18/354,187 filed on June, 18, 2023 which is herein incorporated by reference in its entirety.

The shape and dimensions of the supercontinuum waveguide 720 can vary depending on the application and the wavelengths of the optical signals. As such, the embodiments herein are not limited to any particular type of supercontinuum waveguide 720. Example supercontinuum waveguides are disclosed in "INTEGRATED NONLINEAR PHOTONIC WAVEGUIDE ASSEMBLY FOR FREQUENCY COMB STABILIZATION" U.S. Pat. 11,953,804 which issued on April 9, 2024 and is incorporated herein by reference in its entirety.

Figure 7B illustrates a laser 750 for generating a frequency comb from a MLL, according to one embodiment. While Figure 7A illustrates using the nonlinear loop mirror 325, Figure 7B illustrates using the nonlinear interferometer 410 in Figure 4 for generating a frequency comb 4. The laser 750 includes many of the same components described in the figures above, as shown by using the same reference numbers. In addition, the laser 700 includes a PIC 755 that includes the nonlinear interferometer 410 discussed in Figure 4 for promoting pulse formation to establish a MLL. The PIC 755 also includes an output coupler 765 for coupling some of the light from the MLL into a supercontinuum generation waveguide 720, which can be the same waveguide 720 discussed in Figure 7A.

Like in Figure 7A, the supercontinuum waveguide 720 in Figure 7B receives both the MLL (except it is generated using the nonlinear interferometer 410) and the clock laser input 710 which can be, for example, a laser source stabilized to an atomic or optical reference. As such, the clock laser input 710 can be a very precise clock signal (or reference signal). The resulting optical signal is then detected using the PD 725 which can be processed by a computing device to detect the beat or beat note between the clock laser input 710 and at least one tooth in the MLL.

In one embodiment, the PIC 755 may be a nonlinear optical integrated photonic platform that includes the supercontinuum generation waveguide 720 formed from silicon nitride (SiN), Tantala (Ta₂O₅), lithium niobate (LiNbO₃), lithium niobate on SiN, aluminum nitride, gallium phosphide, silicon, gallium arsenide, or any heterogeneous combination of these platforms.

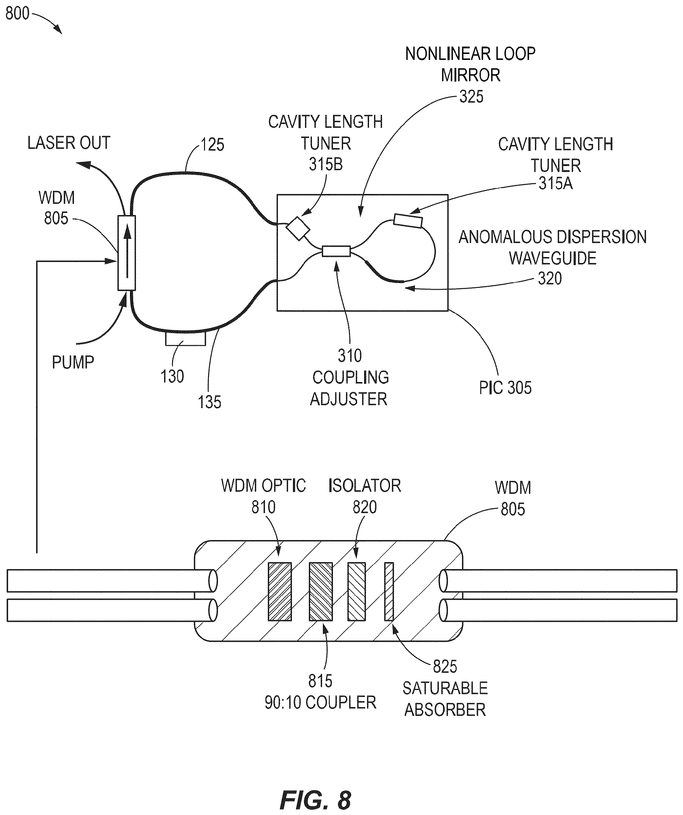

Figure 8 illustrates a saturable absorber in a WDM 805, according to one embodiment. The laser 800 in Figure 8 includes many of the same components described in Figure 3A above, as shown by using the same reference numbers. While a nonlinear loop mirror is shown, the WDM 805 in Figure 8 can also be used in the nonlinear interferometer 410 in Figure 4.

The WDM 805 includes a WDM optic 810, a 90:10 coupler 815, an isolator 820, and a saturable absorber 825. The WDM optic 810 performs the WDM functions described above and the 90:10 coupler 815 directs light to the desired output port of the WDM 805. The isolator 820 ensures the light in the cavity of the laser 800 primarily propagates in only one direction (i.e., only counterclockwise or only clockwise).

The saturable absorber 825 helps to promote pulse formation. For example, it can be difficult to start pulse formation when the laser includes fiber elements as shown in Figure 8. As such, the laser 800 may benefit from having the saturable absorber 825 to provide nonlinear saturable absorption that can aid with passive mode-locking of the cavity to form pulses. In one embodiment, the saturable absorber is a semiconductor saturable absorber that is transmissive so that the light passes through it (unlike a SESAM which is a reflective mirror). In this example, the saturable absorber is added to a telecom fiber component (e.g., the WDM 805) to assist pulse formation, but could be located in different components, or be a separate component. Moreover, using the combination of the saturable absorber 825 and the nonlinear loop mirror 325 can make shorter pulses than using only one of these components.

Figure 9 illustrates a linear cavity laser 900 with a nonlinear mirror, according to one embodiment. Rather than using a ring cavity as described above, the laser 900 has a linear cavity coupled to the PIC 105, which includes the nonlinear mirror 115 (e.g., a nonlinear loop mirror or a nonlinear interferometer) which includes the coupler 120 and a waveguide structure 910 which can be waveguide structure illustrated in Figure 3A that forms the nonlinear loop mirror 325 or the waveguide structure illustrated in Figure 3 that forms the nonlinear interferometer 410.

In this example, the WDM 140 receives the pump and directs the CW light through the optical fiber 125 and the gain fiber 135 to an output coupler (OC) 905. The OC is partially reflective so that while some light exits at the laser output, the remaining portion is reflected back through the WDM 140 and into the PIC 105. As discussed above, the nonlinear mirror 115 promotes pulse formation to convert the CW pump into a mode-locked laser.

While using a linear cavity can make the laser 900 more susceptible to vibrational noise, the linear cavity can be easier to manufacture or use less space than a ring cavity.

Figure 10 illustrates a linear cavity laser 1000 with a nonlinear mirror, according to one embodiment. The laser 1000 is similar as the laser 900, except that the laser output is one of the waveguides in the PIC 105, rather than using the OC 905 in Figure 9. That is, the laser 1000 includes a fully reflective mirror 1005 and the coupler 120 can be set so that some of the light is directed to the laser output.

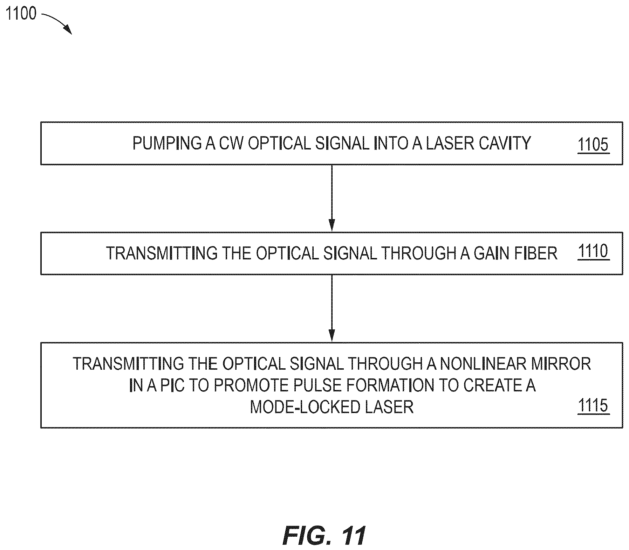

Figure 11 is a method 1100 for generating a MLL, according to one embodiment. At block 1105, a pump provides a CW optical signal into a laser cavity of the laser. The laser cavity can be a ring cavity or a linear cavity.

At block 1110, the optical signal is transmitted through a gain fiber, e.g., an Er doped gain fiber.

At block 1115, the optical signal is transmitted through a nonlinear mirror in a PIC to promote pulse formation to create the MLL. That is, the PIC is optical coupled to the gain fiber, as well as potentially other undoped optical fibers.

In one embodiment, the nonlinear mirror functions as an artificial saturable absorber. The nonlinear mirror can be implemented by a nonlinear loop mirror or a nonlinear interferometer.

In one embodiment, the method 1100 includes stabilizing the MLL to generate a frequency comb. For example, the MLL may be stabilized to generate a frequency comb by locking the frequency f_{CEO} and the repetition rate (fᵣₑₚ) of the pulses or a tooth in the frequency comb/MLL.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

### Further embodiments:

1. A laser, comprising:
   a pump port configured to receive a pump optical signal;
   a gain fiber; and
   a photonic integrated circuit (PIC) optically coupled to the gain fiber, the PIC comprising:
      a nonlinear mirror configured to promote pulse formation to create a mode-locked laser (MLL), wherein the nonlinear mirror comprises a coupler comprising a first interface configured to receive an optical signal from the gain fiber and two interfaces coupled to one or more waveguides in the nonlinear mirror.
2. The laser of embodiment 1, wherein the nonlinear mirror functions as an artificial saturable absorber mirror.
3. The laser of embodiment 1, wherein the nonlinear mirror is a nonlinear loop mirror.
4. The laser of embodiment 3, wherein the nonlinear loop mirror comprises an anomalous dispersion waveguide.
5. The laser of embodiment 4, wherein the anomalous dispersion waveguide is disposed closer to one of the two interfaces of the coupler than the other, wherein the anomalous dispersion waveguide promotes a non-linear phase shift of light propagating in the nonlinear loop mirror.
6. The laser of embodiment 1, wherein the nonlinear mirror is a nonlinear interferometer with a first waveguide arm coupled to a first one of the two interfaces of the coupler and a second waveguide arm coupled to a second one of the two interfaces of the coupler.
7. The laser of embodiment 6, wherein one of the first and second waveguide arms comprises a phase bias tuner to control a phase relationship between light traveling in the first and second waveguide arms.
8. The laser of embodiment 6, wherein the nonlinear interferometer is a Michelson interferometer comprising two waveguide arms, wherein an asymmetry between the two waveguide arms is imposed by (i) a non-equal power splitting ratio at the coupler or (ii) the two waveguide arms comprise waveguides with different widths or lengths that provide a differential intensity-dependent nonlinear phase shift to promote higher-intensity pulse formation.
9. The laser of embodiment 1, further comprising:
   a wavelength division multiplexer (WDM) coupled to the gain fiber, wherein the WDM comprises the pump port.
10. The laser of embodiment 9, wherein the gain fiber and the WDM are part of a ring cavity, wherein an isolator in the WDM ensure light propagates in the ring cavity primarily in one direction, wherein the first interface of the coupler couples to a first end of the isolator and a second interface of the coupler couples to a second end of the isolator.
11. The laser of embodiment 9, wherein the gain fiber and the WDM are part of a linear cavity, the laser further comprising:
   an output coupler or mirror disposed at one end of the linear cavity.
12. The laser of embodiment 9, wherein the WDM comprises a semiconductor saturable absorber that is transmissive to light, wherein the saturable absorber helps to promote the pulse formation to create the MLL.
13. The laser of embodiment 1, wherein the PIC further comprises:
   a cavity length tuner to adjust a cavity length of the laser.
14. The laser of embodiment 1, wherein the PIC further comprises:
   a supercontinuum waveguide configured to receive and combine the MLL and a reference laser.
15. The laser of embodiment 14, further comprising a photodetector (PD) optically coupled to the supercontinuum waveguide and configured to generate an output signal for locking a frequency of the carrier envelope offset (CEO) (f_{CEO}) and the repetition rate (fᵣₑₚ) of pulses in the MLL for generating a frequency comb.
16. The laser of embodiment 15, wherein the nonlinear mirror comprises a tuner configured to control the f_{CEO}.
17. The laser of embodiment 1, wherein the coupler is controllable to adjust a coupling ratio of light that is transmitted into a first one of the two interfaces relative to a second one of the two interfaces.
18. A method, comprising:
   pumping a continuous wave (CW) optical signal into a laser cavity;
   transmitting the optical signal through a gain fiber that is part of the laser cavity; and
   transmitting the optical signal through a nonlinear mirror in a PIC to promote pulse formation to create a mode-locked laser (MLL).
19. The method of embodiment 18, wherein the nonlinear mirror functions as an artificial saturable absorber.
20. The method of embodiment 18, further comprising:
   stabilizing the MLL to generate a frequency comb.
21. A system, comprising:
   a pump port configured to receive a pump optical signal;
   a gain fiber; and
   a PIC optically coupled to the gain fiber, the PIC comprising:
      a nonlinear mirror configured to function as an artificial saturable absorber mirror.

## Claims

1. A laser, comprising:
a pump port configured to receive a pump optical signal;
a gain fiber; and
a photonic integrated circuit (PIC) optically coupled to the gain fiber, the PIC comprising:
a nonlinear mirror configured to promote pulse formation to create a mode-locked laser (MLL), wherein the nonlinear mirror comprises a coupler comprising a first interface configured to receive an optical signal from the gain fiber and two interfaces coupled to one or more waveguides in the nonlinear mirror.

2. The laser of claim 1, wherein the nonlinear mirror functions as an artificial saturable absorber mirror; or
wherein the coupler is controllable to adjust a coupling ratio of light that is transmitted into a first one of the two interfaces relative to a second one of the two interfaces

3. The laser of claim 1, wherein the nonlinear mirror is a nonlinear loop mirror.

4. The laser of claim 3, wherein the nonlinear loop mirror comprises an anomalous dispersion waveguide;
especially wherein the anomalous dispersion waveguide is disposed closer to one of the two interfaces of the coupler than the other, wherein the anomalous dispersion waveguide promotes a non-linear phase shift of light propagating in the nonlinear loop mirror.

5. The laser of claim 1, wherein the nonlinear mirror is a nonlinear interferometer with a first waveguide arm coupled to a first one of the two interfaces of the coupler and a second waveguide arm coupled to a second one of the two interfaces of the coupler.

6. The laser of claim 5, wherein one of the first and second waveguide arms comprises a phase bias tuner to control a phase relationship between light traveling in the first and second waveguide arms.

7. The laser of claim 5, wherein the nonlinear interferometer is a Michelson interferometer comprising two waveguide arms, wherein an asymmetry between the two waveguide arms is imposed by (i) a non-equal power splitting ratio at the coupler or (ii) the two waveguide arms comprise waveguides with different widths or lengths that provide a differential intensity-dependent nonlinear phase shift to promote higher-intensity pulse formation.

8. The laser of claim 1, further comprising:
a wavelength division multiplexer (WDM) coupled to the gain fiber, wherein the WDM comprises the pump port.

9. The laser of claim 8, wherein the gain fiber and the WDM are part of a ring cavity, wherein an isolator in the WDM ensure light propagates in the ring cavity primarily in one direction, wherein the first interface of the coupler couples to a first end of the isolator and a second interface of the coupler couples to a second end of the isolator; or
wherein the gain fiber and the WDM are part of a linear cavity, the laser further comprising an output coupler or mirror disposed at one end of the linear cavity; or
wherein the WDM comprises a semiconductor saturable absorber that is transmissive to light, wherein the saturable absorber helps to promote the pulse formation to create the MLL.

10. The laser of claim 1, wherein the PIC further comprises:
a cavity length tuner to adjust a cavity length of the laser.

11. The laser of claim 1, wherein the PIC further comprises:
a supercontinuum waveguide configured to receive and combine the MLL and a reference laser.

12. The laser of claim 11, further comprising a photodetector (PD) optically coupled to the supercontinuum waveguide and configured to generate an output signal for locking a frequency of the carrier envelope offset (CEO) (f_{CEO}) and the repetition rate (fᵣₑₚ) of pulses in the MLL for generating a frequency comb; especially
wherein the nonlinear mirror comprises a tuner configured to control the f_{CEO}.

13. A method, comprising:
pumping a continuous wave (CW) optical signal into a laser cavity;
transmitting the optical signal through a gain fiber that is part of the laser cavity; and
transmitting the optical signal through a nonlinear mirror in a PIC to promote pulse formation to create a mode-locked laser (MLL).

14. The method of claim 13, wherein the nonlinear mirror functions as an artificial saturable absorber; or
wherein the method further comprises stabilizing the MLL to generate a frequency comb.

15. A system, comprising:
a pump port configured to receive a pump optical signal;
a gain fiber; and
a PIC optically coupled to the gain fiber, the PIC comprising:
a nonlinear mirror configured to function as an artificial saturable absorber mirror.
